# FASCICULE DE BREVET EUROPEEN

(11) **EP 4 168 480 B1**
(45) Date de publication et mention de la délivrance du brevet: **13.11.2024**
(21) Numéro de dépôt: 22726269.8
(22) Date de dépôt: 22.04.2022
(51) Int. Cl.: C08J 11/00, C08J 11/04, C08J 11/06, C08L 67/02, F21V 23/00, B33Y 80/00, C08G 63/183

(54) **OBJET DÉCORATIF EN PET ET UTILISATION DE PET POUR LA FABRICATION D'UN TEL OBJET**
ZIERGEGENSTAND AUS PET UND VERWENDUNG VON PET ZUR HERSTELLUNG EINES SOLCHEN GEGENSTANDES
DECORATIVE OBJECT MADE FROM PET AND USE OF PET FOR PRODUCING SUCH AN OBJECT

(43) Date de publication de la demande: 26.04.2023
(73) Titulaire: BLACHERE ILLUMINATION, 84400 Apt (FR)
(72) Inventeur: ALLAIN LAUNAY, Romain, 84400 Apt (FR); HUGUES, Johan, 84400 Apt (FR); DEBAT, Benjamin, 84400 Apt (FR); FABRE, Dorian, 84400 Apt (FR)
(74) Mandataire: Roman, Alexis
(86) Numéro de dépôt international: PCT/FR2022/000038
(87) Numéro de publication internationale: WO 2022/223887

(56) Documents cités:
- FR-A1- 3 069 800
- US-A1- 2015 078 000
- AWAJA F ET AL: "Recycling of PET", EUROPEAN POLYMER JOURNAL, PERGAMON PRESS LTD OXFORD, GB, vol. 41, no. 7, 1 July 2005 (2005-07-01), pages 1453 - 1477, XP027696064, ISSN: 0014-3057, [retrieved on 20050701]

## Description

### Domaine technique.

L'invention concerne un objet décoratif en polyéthylène téréphtalate ou essentiellement à base de polyéthylène téréphtalate, d'une provenance et d'une composition particulière.

L'invention se rapporte au domaine technique des objets décoratifs tels que des décorations lumineuses temporaires ou permanentes, et en particulier des décorations lumineuses situées en extérieur, telles que celles installées traditionnellement pour les fêtes ou autres manifestations, par exemple dans le domaine des décoration lumineuses publicitaires ou pour l'animation de vitrines commerciales.

### Etat de la technique.

Les objets décoratifs, tels qu'en particulier les décors lumineux, sont habituellement réalisés à partir d'un cadre en aluminium sur lequel sont solidarisées une ou plusieurs guirlandes lumineuses, généralement formées par une succession de LEDs.

Dans les documents brevet FR 2796446 et FR 3069800, au nom de la demanderesse, ce cadre support des guirlandes est en partie réalisé par injection-extrusion de matière plastique.

Ainsi, de tels objets décoratifs, du fait qu'ils doivent fixer ou maintenir des éclairages sous forme de guirlandes ou d'autres éléments de décoration, nécessitent un cadre partiel ou total en un matériau mécaniquement résistant. En général, ce matériau formant cadre pour le support des éclairages ou analogues consiste en de l'aluminium car ce matériau est léger tout en étant résistant.

Néanmoins, de tels objets décoratifs sont complexes à produire car ils nécessitent deux étapes distinctes, une première étape de réalisation du cadre métallique et une deuxième étape de moulage ou d'extrusion d'un plastique sur tout ou partie du cadre métallique, pour loger les éclairages et/ou pour former une forme originale.

On connaît à l'heure actuelle des objets décoratifs entièrement fait en matière plastique mais alors ces objets sont faits de cordons extrudés présentant une épaisseur ou un diamètre très élevé, de l'ordre d'au moins trois centimètres d'épaisseur ou de diamètre.

La présente invention entend remédier à cette lacune en proposant un objet décoratif réalisé uniquement à partir d'un matériau polymère choisi spécialement pour présenter d'excellentes propriétés mécaniques, d'isolation électrique ainsi que de résistance à la chaleur ou à de sévères conditions d'environnement (fort écart de température et hydrométrie importante). En effet, l'objet décoratif doit pouvoir résister aux conditions d'utilisation et de sollicitations parfois sévères, et donc présenter de bonnes propriétés mécaniques, thermiques, chimiques et environnementales.

Par ailleurs, un objectif de la présente invention vise à réduire l'impact négatif des matériaux de synthèse - les plastiques et autres matériaux incluant ces plastiques - sur notre environnement.

On connaît dans l'état de la technique le document US 2015/078000 qui ne divulgue pas l'utilisation de PET recyclé ni même des cordons de PET présentant une épaisseur comprise entre 1 mm (millimètre) et 15 mm et encore moins le fait que le PET est envisagé pour réaliser des objets décoratifs.

On connaît également l'article intitulé « Recycling of PET », rédigé par Awaja F et Al et paru en 2005 dans le European Polymer Journal*,* qui divulgue un cordon de PET recyclé présentant une épaisseur de 0,45 mm. Un tel cordon a été testé par la demanderesse (cf. résultats dans le Tableau 1 pour un cordon de 0,5 mm d'épaisseur) et ne présente en aucun cas les propriétés mécaniques nécessaires pour un objet décoratif selon la présente invention. On note également que ce document enseigne uniquement à l'homme du métier de retenir les PET recyclé présentant une quantité en eau (MW) inférieure à 0,02 % (cf. paragraphe 2.1.2).

### Présentation de l'invention.

Il a aussi été constaté par la demanderesse, après diverses expériences et manipulations, qu'une composition de polyéthylène téréphtalate (PET) recyclé particulière pouvait satisfaire à toutes les exigences, essentiellement mais non exclusivement de nature mécanique, pour obtenir un objet décoratif.

La solution proposée par l'invention est un objet décoratif formé d'au moins une couche de cordon extrudé, présentant une épaisseur comprise entre un et quinze millimètres, d'une composition à base de polymère avantageusement comportant au moins un additif.

Le dispositif selon l'invention se caractérise en ce que la composition à base de polymère consiste en du polyéthylène téréphtalate recyclé, ou un mélange de polyéthylène téréphtalate recyclé et de polyéthylène téréphtalate non recyclé, présentant au moins 99% en masse de polyéthylène téréphtalate et les quantités résiduelles suivantes :
- au plus 50 ppm de Polychlorure de vinyle,
- au plus 100 ppm d'eau, et
- au plus 30 ppm de Polyéthylène, de préférence au plus 15 ppm de Polyéthylène.

On entend par l'expression « objet décoratif » un objet qui présente comme finalité la décoration esthétique d'un endroit, intérieur ou extérieur. Bien entendu, cet objet décoratif peut être associé à un ou plusieurs autres éléments visuels tels que par exemple des guirlandes ou des lumières et dans ce cas l'objet décoratif sert également de support pour ces éléments associés à l'objet décoratif.

On entend par l'expression « mélange de polyéthylène téréphtalate (PET) recyclé et de polyéthylène téréphtalate non recyclé » un mélange à base de polyéthylène téréphtalate recyclé incorporant ou incluant un ajout de polyéthylène téréphtalate non recyclé, c'est-à-dire non issu d'un processus de recyclage, provenant d'une synthèse directe de polyéthylène téréphtalate. Ce PET non recyclé peut consister en du PET dit « vierge » ou du PET-G, Polyéthylène Téréphtalate modifié glycol (« polyethylene terephthalate glycol-modified ») et ce PET non recyclé peut présenter en tout ou partie du PET vierge et/ou du PET-G. Autrement dit, le PET non recyclé peut consister lui-même en un mélange PET, typiquement un mélange de PET et de PET-G, ou consister intégralement en du PET-G.

La teneur en eau est déterminée par un titrage Karl Fischer tandis que la teneur en PVC (Polychlorure de vinyle) et en PE (Polyéthylène) peuvent être obtenue par différents procédés connus de l'homme du métier et qui donnent des résultats identiques ou quasi-identiques, en particulier l'ASTM D5991-17 (procédé C ou D) de 2017 pour le PVC et l'ISO 11542-1 de 2001 ou encore l'ISO 1133-1 de 2011 pour le PE.

Selon un mode de réalisation avantageux, un tel mélange de PET recyclé et de PET (non recyclé) présente au moins 50% en poids de PET recyclé, préférentiellement au moins 70% en poids de PET recyclé.

Outre les qualités « mécaniques » de l'objet décoratif selon l'invention, l'utilisation de PET recyclé permet de recycler une partie de ce plastique abondamment utilisé à l'heure actuelle dans les bouteilles. Ainsi, on peut créer un objet décoratif, facile à produire, présentant d'excellentes propriétés mécaniques et vertueux au regard des considérations écologiques.

On doit noter ici que l'expression de « composition à base de polymère » renvoie ici à l'utilisation de granulés de PET recyclé se présentant classiquement sous forme de granulés.

Le PET recyclé est classiquement issu d'un recyclage de bouteilles selon les étapes successives suivant :
- la collecte du PET
- le tri du PET
- le broyage en paillettes
   Dans les usines de régénération, un tri supplémentaire est effectué pour éliminer les derniers éléments indésirables. Ces emballages sont ensuite broyés et réduis sous forme de paillettes.
- la séparation des bouchons et des étiquettes
   Les usines de régénération nettoient ensuite les paillettes en PET en les débarrassant de tous les autres constituants de la bouteille.
- un dernier tri optique
   Pour améliorer la qualité des paillettes, les régénérateurs effectuent parfois une dernière étape de purification par tri optique. Pour cela, on utilise différents procédés de détection et des caméras qui vont repérer les derniers éléments indésirables parmi les paillettes de PET. Un système de soufflage sépare ensuite les paillettes en PET des autres types de plastiques. Il existe différentes typologies de paillettes en PET : celles en PET clair (issu des bouteilles transparentes ou bleutées claires) et celles en PET foncé (venant des bouteilles bleu foncé, vertes ou colorées).
   Dans le cadre de la présente invention, le PET recyclé provient préférentiellement de paillettes en PET foncé.
- l'extrusion du PET
   Les paillettes PET vont alors entamer une phase d'extrusion. Elle consiste à faire fondre les paillettes à 280°C dans une énorme machine pour donner des joncs qui seront refroidis dans l'eau puis coupés pour former des granulés. Il existe des granulés clairs issus du PET clair et des granulés colorés issus du PET foncé.
- la purification des granulés
Les granulés de PET sont ensuite purifiés par polycondensation.

C'est lors de cette dernière étape que différents PET recyclés sont obtenus, au niveau de leur qualité ou autrement dit de leurs quantités résiduelles. Il est important de noter ici qu'il existe sensiblement autant de compositions de PET recyclé qu'il existe de procédés de recyclage du PET.

Dans son objectif de réaliser un objet décoratif économique et techniquement satisfaisant, la présente invention entend réaliser une sélection tout d'abord sur la nature du polymère choisi, puis une fois ce polymère sélectionné, définir une sélection parmi l'ensemble des possibilités et variantes de ce polymère sélectionné.

Le restant inférieure à 1% en poids de la composition polymère peut consister en un polyester tels que par exemple un PLA (polymère d'acide polylactique) ou un PCL (Polycaprolactone).

D'autres caractéristiques avantageuses de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :

Préférentiellement, les quantités résiduelles présentent en outre au plus cinq (5) ppm de métaux. On entend ici par le terme de « métal » essentiellement, mais non exclusivement, des hydroxydes métalliques tels que par exemple un hydroxyde de sodium, hydroxyde de potassium ou encore un hydroxyde de calcium. La demanderesse a pu déterminer qu'au-delà d'une certaine quantité de métaux, ces derniers ont un impact négatif sur les propriétés mécaniques et/ou physico-chimiques de l'objet décoratif fabriqué.

Préférentiellement, les quantités résiduelles présentent en outre au plus dix (10) ppm de polyacrylonitrile (PAN). Ce PAN est un composant qui est susceptible de se trouver en quantité plus ou moins importante dans les PET recyclés. Or, à nouveau, la demanderesse a mis en évidence un impact négatif de ce PAN, lorsque présent au-delà d'une certaine quantité, sur les propriétés mécaniques et/ou physico-chimiques de l'objet décoratif fabriqué.

Très avantageusement, les quantités résiduelles sont :
- d'au plus 20 ppm de Polychlorure de vinyle,
- d'au plus 50 ppm d'eau, préférentiellement d'au plus 20 ppm d'eau.

La demanderesse a mis en évidence que le respect de ces limites en quantité résiduelle de PVC et d'eau améliore encore les propriétés mécaniques et/ou physico-chimiques de l'objet décoratif.

Selon une possibilité offerte par l'invention, la susdite composition à base de polymère est mélangée avec au moins un additif pour former les cordons extrudés, ledit additif étant présent dans le mélange « composition à base polymère - additif » à hauteur d'au plus 40% en poids dudit mélange.

Préférentiellement, l'additif est présent dans le mélange « composition à base polymère - additif » à hauteur d'au plus 10% en poids dudit mélange, de préférence d'au plus 5% en poids dudit mélange.

Avantageusement, l'additif consiste en des plastifiants, des promoteurs d'adhésion, des stabilisant/absorbeurs d'UV, des antioxydants, des retardateurs de flamme, de pigments/colorants/azurants et/ou de charges. Ici, l'utilisation du pluriel peut signifier une pluralité d'un même composant, par exemple l'expression « des plastifiants » peut renvoyer à une pluralité de plastifiants d'une même composition et nature/famille chimique. Cette même expression au pluriel peut également renvoyer à une pluralité de composants - d'un point de vue chimique, le composant n'est pas unique - différents, de par leur composition comme leur nature/famille chimique, appartenant tous à la même catégorie d'additifs, par exemple à la famille des additifs plastifiants.

De préférence, l'objet décoratif présente une pluralité de couches de cordons extrudés superposées ou ajoutées les unes sur les autres.

Préférentiellement, l'épaisseur du ou des cordon(s) est comprise entre deux et huit millimètres, de préférence entre trois et cinq millimètres.

Un autre aspect de l'invention concerne une utilisation d'une composition à base de polymère, avantageusement comportant au moins un additif, la composition à base de polymère consistant en du polyéthylène téréphtalate recyclé présentant au moins 99% en masse de polyéthylène téréphtalate et les quantités résiduelles suivantes :
- au plus 50 ppm de Polychlorure de vinyle, avantageusement au plus 10 ppm de Polychlorure de vinyle.
- au plus 100 ppm d'eau, avantageusement d'au plus 10 ppm d'eau, et
- au plus 30 ppm de Polyéthylène,
pour la fabrication d'un objet décoratif formé à partir d'au moins une couche de cordon extrudé, avantageusement une pluralité de couches de cordons, présentant une épaisseur comprise entre un et quinze millimètres.

Selon un premier mode d'exécution de l'invention, on met en oeuvre l'invention par un procédé de fabrication d'un objet décoratif à partir d'au moins une couche d'un cordon extrudé d'une composition à base polymère, comportant une étape de passage d'une composition à base polymère dans une filière d'extrusion depuis une entrée d'alimentation en ladite composition jusqu'à une tête d'extrusion, présentant un diamètre d'ouverture D, de laquelle sort un cordon extrudé de ladite composition, la température du cordon extrudé, à la sortie de la tête d'extrusion, étant comprise entre 160°C et 260°C, caractérisé en ce que la tête d'extrusion est située à une distance H comprise entre deux et huit millimètres d'un support de réception de la couche du cordon extrudé, le cordon extrudé étant déposé sur le support de réception par l'effet de la gravitation, et en ce que le diamètre d'ouverture D de la tête d'extrusion est égal à H +/- 1 millimètre.

Dans ce cadre, avantageusement, la distance H est comprise entre quatre et six millimètres, avantageusement la distance H est égale à quatre millimètres.

Avantageusement, la tête d'extrusion se déplace à une vitesse comprise entre quarante et cent cinquante millimètres par seconde, avantageusement comprise entre soixante et cent millimètres par seconde.

De préférence, le cordon extrudé sort de la tête d'extrusion avec un débit compris entre cinq et quinze kilos par heure, avantageusement compris entre six et dix kilos par heure.

De préférence, le cordon extrudé présente, en sortie de la tête d'extrusion, une viscosité comprise entre quatre cents (400) et quatre cent cinquante (450) Pascal par seconde (Pa.s⁻¹) définie selon la norme ISO 11443.

Selon un deuxième mode d'exécution de l'invention, on met en oeuvre l'invention par un procédé de fabrication d'un objet décoratif à partir d'au moins une première couche d'un cordon extrudé à chaud d'une composition à base polymère, comportant une étape de passage d'une composition à base polymère dans une filière d'extrusion depuis une entrée d'alimentation en ladite composition jusqu'à une tête d'extrusion de laquelle sort, en milieu ambiant, le cordon extrudé, la première couche de cordon extrudé étant déposée sur un support de réception, caractérisé en ce que ledit procédé comprend les étapes consistant à :
- utiliser une composition à base polymère consistant en du polyéthylène téréphtalate recyclé, ou un mélange de polyéthylène téréphtalate recyclé et de polyéthylène téréphtalate non recyclé,
- chauffer la composition de sorte que la température du cordon extrudé, à la sortie de la tête d'extrusion, soit comprise entre 200°C et 300°C,
- refroidir le support de réception de manière à forcer le refroidissement de la première couche de cordon extrudé par conduction, la température de refroidissement dudit support étant inférieure ou égale à la température du milieu ambiant.

Avantageusement, la température de refroidissement du support de réception est choisie de manière à ce que la vitesse de refroidissement de la première couche de cordon extrudé soit comprise entre 250°C/min et 350°C/min.

De préférence, le support de réception est réalisé dans un matériau choisi dans la famille suivante : aluminium, alliage d'aluminium, cuivre, alliage de cuivre.

Avantageusement, le support de réception est refroidi à une température comprise entre -10°C et +10°C.

Selon un troisième mode d'exécution de l'invention, on met en oeuvre l'invention par un procédé de fabrication d'un objet décoratif à partir d'au moins un cordon extrudé à chaud d'une composition à base polymère, comportant une étape de passage d'une composition à base polymère dans une filière d'extrusion depuis une entrée d'alimentation en ladite composition jusqu'à une tête d'extrusion de laquelle sort, en milieu ambiant, le cordon extrudé, une première couche de cordon extrudé étant déposée sur un support de réception, caractérisé en ce que ledit procédé comprend les étapes consistant à :
- utiliser une composition à base polymère consistant en du polyéthylène téréphtalate recyclé, ou un mélange de polyéthylène téréphtalate recyclé et de polyéthylène téréphtalate non recyclé,
- chauffer la composition de sorte que la température du cordon extrudé, à la sortie de la tête d'extrusion, soit comprise entre 200°C et 300°C,
- souffler un gaz sur le cordon extrudé de manière à forcer le refroidissement dudit cordon par convection, ledit gaz étant soufflé à une température inférieure ou égale à la température du milieu ambiant.

On entend par l'expression « température du milieu ambiant » une température comprise entre 15°C et 30°C pour une pression d'environ 1 atmosphère (~10⁵ Pascal).

Les premier, deuxième et troisième modes d'exécution présentés ci-dessus sont avantageusement mis en oeuvre et peuvent être éventuellement combinés, depuis un seul de ces modes d'exécution (l'un des trois modes d'exécution) jusqu'au trois modes d'exécution combinés.

Selon un aspect relatif à l'objet décoratif, celui-ci peut être obtenu par un procédé de fabrication d'un objet décoratif formé par l'extrusion à chaud d'au moins un cordon d'une composition à base polymère, comportant les étapes suivantes :
- passage d'une composition à base polymère dans une filière d'extrusion depuis une entrée d'alimentation en ladite composition jusqu'à une tête d'extrusion déplaçable de laquelle sort le cordon extrudé, une première couche de cordon extrudé étant déposée sur un support de réception,
- déplacement de la tête d'extrusion selon une trajectoire d'extrusion prédéfinie, de sorte que l'objet décoratif présente des couches d'au moins un cordon extrudé empilées les unes au-dessus des autres, lesdites couches étant parallèles au support de réception et définissant des niveaux d'extrusion,
caractérisé en ce que l'extrusion est réalisée de sorte que l'objet décoratif comprend au moins une première zone présentant un premier nombre de couches et une deuxième zone présentant un deuxième nombre de couches différent dudit premier nombre.

### Avantageusement :

- le premier nombre de couches dans la première zone est supérieur ou égal à 1, et
- le deuxième nombre de couches dans la deuxième zone est supérieur ou égal à 3,

De préférence, le procédé de fabrication comprend une étape consistant à équiper la tête d'extrusion d'un obturateur mobile entre une position ouverte autorisant la sortie du cordon de ladite tête et une position fermée empêchant la sortie du cordon de ladite tête.

De préférence, pour extruder une couche de niveau N dans la première zone depuis une couche de niveau M dans la deuxième zone, tel que M supérieur ou égal à N+1, les étapes suivantes sont réalisées :
- placer l'obturateur en position fermée après la fin de l'extrusion de la couche de niveau M dans la deuxième zone,
- déplacer la tête d'extrusion depuis la deuxième zone vers une position d'extrusion située en vis-à-vis d'une couche de niveau N-1 de la première zone, l'obturateur étant maintenu dans la position fermée,
- lorsque la tête d'extrusion est positionnée dans la position d'extrusion de la première zone, placer l'obturateur en position ouverte et extruder la couche de niveau N en la déposant sur la couche de niveau N-1 de ladite première zone.

Selon un mode de réalisation avantageux, pour extruder une couche de niveau N dans la deuxième zone depuis une couche de niveau M dans ladite deuxième zone, tel que M supérieur ou égal à N+2, les étapes suivantes sont réalisées :
- placer l'obturateur en position fermée après la fin de l'extrusion de la couche de niveau M,
- déplacer la tête d'extrusion vers une position d'extrusion située en vis-à-vis d'une couche de niveau N-1 de ladite deuxième zone, l'obturateur étant maintenu dans la position fermée,
- lorsque la tête d'extrusion est positionnée dans la position d'extrusion de la deuxième zone, placer l'obturateur en position ouverte et extruder la couche de niveau N en la déposant sur la couche de niveau N-1 de ladite deuxième zone.

Avantageusement, pour extruder une couche de niveau M dans la deuxième zone depuis une couche de niveau N dans ladite deuxième zone, tel que M supérieur ou égal à N+2, les étapes suivantes sont réalisées :
- placer l'obturateur en position fermée après la fin de l'extrusion de la couche de niveau N,
- déplacer la tête d'extrusion vers une position d'extrusion située en vis-à-vis d'une couche de niveau M-1 de la deuxième zone, l'obturateur étant maintenu dans la position fermée,
- lorsque la tête d'extrusion est positionnée dans la position d'extrusion de la deuxième zone, placer l'obturateur en position ouverte et extruder la couche de niveau M en la déposant sur la couche de niveau M-1 de ladite deuxième zone.

De préférence, le procédé de fabrication comprend une étape consistant à solidariser la tête d'extrusion à un bras de manipulation robotisé de sorte que ladite tête puisse être inclinée d'un angle α compris entre 0° et 90° par rapport à une normale du support de réception.

Dans ce cadre, avantageusement, au moins dans la deuxième zone, les couches sont extrudées de manière à présenter des bordures adjacentes et dans lequel pour extruder une couche de niveau N dans la deuxième zone depuis une couche de niveau M dans ladite deuxième zone, tel que M supérieur ou égal à N+2, les étapes suivantes sont réalisées :
- après la fin de l'extrusion de la couche de niveau M, orienter la tête d'extrusion perpendiculairement aux bordures,
- déplacer la tête d'extrusion de manière à extruder un cordon le long des bordures, depuis la couche de niveau M, jusqu'à atteindre une position d'extrusion de la couche de niveau N, laquelle position est située en vis-à-vis d'une couche de niveau N-1 de la deuxième zone,
- orienter la tête d'extrusion perpendiculairement à la couche de niveau N-1 et extruder la couche de niveau N en la déposant sur ladite couche de niveau N-1.

D'autres avantages et caractéristiques de l'invention apparaîtront mieux à la lecture de la description d'un mode de réalisation préféré qui va suivre.

### Description des modes de réalisation.

Un objet décoratif peut être formé par extrusion d'une composition de PET recyclé selon l'invention par des techniques d'extrusion bien connues de l'homme du métier.

L'objet décoratif peut par exemple consister en un flocon de neige stylisé installé sur une volute. À titre d'exemple, sa longueur est comprise entre 50 centimètres (cm) et deux mètres tandis que sa largeur est comprise entre vingt centimètres et un mètre. Concernant son épaisseur, une particularité de la présente invention réside dans le fait qu'un tel objet est formé d'au moins une couche de cordon extrudé, éventuellement une pluralité de couches de cordons extrudés et ces cordons extrudés présentent tous une épaisseur sensiblement identique, comprise entre 3 mm et 10 mm millimètres. Cet objet décoratif peut être attaché à un câble ou fixé à un poteau ou un mur pour une installation extérieure, par exemple dans une rue ou sur la façade d'un monument, ou encore à l'intérieur d'une habitation. Une ou plusieurs guirlandes lumineuses, non visibles sur cette figure annexée, peuvent être fixées sur cet objet.

De façon avantageuse, on peut également envisager qu'un objet décoratif selon l'invention peut être obtenu par les techniques suivantes spécifiques.

Ainsi, la filière d'extrusion utilisée ici est une filière d'extrusion classique qui n'est modifiée en rien dans le cadre de la présente invention, si ce n'est avantageusement au niveau du diamètre d'ouverture D de sa tête d'extrusion qui est en lien avec la distance ou la hauteur H à laquelle cette tête d'extrusion se trouve ou se situe de la surface du support de réception. Bien entendu, lorsqu'on réalise un objet décoratif multicouches selon l'invention, c'est-à-dire par superposition d'une pluralité de cordons extrudés placés les uns sur les autres, c'est la surface de la dernière couche de cordons extrudé qui forme le support de réception. En conséquence, dans ce dernier cas, la distance H n'est plus celle entre le support de réception et la tête d'extrusion mais la distance ou la hauteur, toujours désignée H, entre la surface supérieure du cordon extrudé et la tête d'extrusion.

Considérant la filière d'extrusion, le diamètre d'ouverture D de la tête d'extrusion peut être fixe ou variable, selon des possibilités bien connues dans le domaine technique mais bien entendu, ce diamètre d'ouverture D étant généralement constant pendant la durée d'extrusion du cordon pour former l'objet décoratif. Dans l'hypothèse où ce diamètre d'ouverture D est variable ou différent au cours de la fabrication de l'objet décoratif, le rapport défini dans le cadre de la présente invention entre les longueurs H et D reste toujours valable. Ainsi, si on modifiait D au cours de la fabrication d'un objet décoratif selon l'invention, alors H est modifié en conséquence.

Les moyens de commande et de déplacement de la filière d'extrusion comprennent par ailleurs une unité de gestion électronique, non représentée sur les figures annexées. Les mouvements du bras robotisé 30 sont pilotés par cette unité de gestion électronique. L'unité de gestion électronique se présente notamment sous la forme d'un ordinateur portable ou fixe, pourvu notamment d'un processeur, microprocesseur ou CPU (pour « Central Processing Unit ») et d'une mémoire, dans laquelle est enregistré un logiciel dont les instructions, lorsqu'elles sont exécutées par le processeur, microprocesseur ou CPU, permettent de commander le déplacement de la filière d'extrusion dans l'espace. Cette unité de gestion électronique gère aussi la filière d'extrusion, c'est-à-dire en particulier l'alimentation en composition à base polymère et le débit d'extrusion.

Le terme « logiciel » peut être compris comme : application informatique, programmes informatiques ou « software ». Par souci de clarté, il faut comprendre au sens de l'invention que « le bras robotisé fait quelque chose » signifie « le logiciel exécuté par le processeur, microprocesseur ou CPU de l'unité de gestion électronique fait quelque chose ».

Le déplacement de la filière d'extrusion selon une trajectoire prédéfinie permet de fabriquer un objet décoratif par dépose de matière, pour un objet décoratif monocouche, ou par ajout de matière (fabrication additive) par empilement en couches de cordons extrudés. Ces couches de cordons extrudés peuvent être empilées les unes au-dessus des autres et/ou éventuellement les unes à côtés des autres. L'empilement des couches de cordons extrudés crée le volume de l'objet décoratif même si un tel objet disposant de cordon monocouche présente déjà une épaisseur d'au moins plusieurs millimètres. La trajectoire de la filière d'extrusion selon les axes longitudinal, axial et éventuellement vertical, soit suivant trois directions perpendiculaires entre elles, permet de réaliser tous types de contours et courbes de l'objet décoratif désiré.

En pratique, un concepteur dessine l'objet décoratif souhaité grâce à un outil de conception assistée par ordinateur (CAO). Le fichier obtenu est traité par le logiciel enregistré dans la mémoire de l'unité de gestion électronique qui organise le découpage en tranches des différentes couches nécessaires à la réalisation de l'objet décoratif. Le bras robotisé est piloté selon ce découpage en tranche, de sorte que la filière d'extrusion dépose le cordon couche par couche, si besoin, jusqu'à obtenir l'objet décoratif final. L'objet décoratif est ainsi obtenu de manière rapide, précise et avec une répétabilité optimale.

Dans la suite sont présentés des tests et essais qui ont permis à la demanderesse d'évaluer et de sélectionner la composition à base polymère selon l'invention. Par souci de clarté, seule une partie de ces tests et essais réalisés par la demanderesse sont présentés ci-après.

### Tests réalisés sur des éprouvettes :

Compte tenu de l'usage de l'objet décoratif, les tests mécaniques ont été déterminants pour apprécier les matières plastiques et certains des résultats de tests et d'essais réalisés par la demanderesse sont présentés dans le tableau ci-dessous. Néanmoins, il faut noter que des tests complémentaires, par exemple de tenue au vieillissement - exécutés selon la série de normes internationales ISO 22088 - ont montré des résultats particulièrement intéressants pour les compositions à base polymère selon l'invention.

Des éprouvettes identiques, obtenues après extrusion, ont été constituées pour pouvoir réaliser les tests normés ci-dessous, soit selon la norme ISO 527-1 pour la détermination du Module d'Young et l'élongation à la rupture et selon la norme ISO179-1 pour le choc Charpy entaillé. Des résultats de tests sont présentés dans le tableau 1 ci-dessous. A l'exception de l'éprouvette de PET présentant un diamètre de 0,5 mm, toutes les autres éprouvettes présentées dans le Tableau 1 ci-dessous ont été testé avec un diamètre identique, compris entre 4 mm et 9 mm (les autres diamètres du domaine selon l'invention, à savoir de 1-15 mm ont bien entendu été testé pour déterminer ledit domaine).

| Tableau 1 | | | |
|---|---|---|---|
| éprouvette | Module d'Young (MPa) | Elongation à la rupture (%) | Choc Charpy entaillé (KJ.m⁻²) |
| Plastique PET (pur) ∅ = 0,5 mm | 1830 (±150) | 45 (±5) | 1,8 (±0.3) |
| Plastique ABS | 1600 (±110) | 20 (±5) | 1,9 (±0,3) |
| Plastique PC | 2300 (±190) | 120 (±10) | 2,5 (±0,5) |
| Plastique PA66 | 1950 (±200) | 45 (±5) | 2,1 (±0,5) |
| Plastique PMMA | 80 | 3,5 (±0,4) | 1,8 (±0,3) |
| PET à 95% pur + PE entre 2-5% | pas de tenue mécanique significative suite à l'extrusion | pas de tenue mécanique significative suite à l'extrusion | pas de tenue mécanique significative suite à l'extrusion |
| PET à 99% pur + : | 1920 (±150) | 50 (±10) | 1,8 (±0,3) |
| - PVC > 150 ppm | | | |
| - H₂O > 80 ppm | | | |
| - PE > 45 ppm | | | |
| PET à 99% pur + : | 1950 (±150) | 70 (±15) | 2,2 (±0,4) |
| - PVC ~ 80 ppm | | | |
| - H₂O ~ 110 ppm | | | |
| - PE ~ 40 ppm | | | |
| **PET à 99% pur +** : | **2000 (±200)** | **220 (±40)** | **2,4 (±0,5)** |
| **- PVC** ~ **40 ppm** | | | |
| **- H₂O** ~ **40 ppm** | | | |
| **- PE** ~ **10 ppm** | | | |
| **PET à 99% pur + :** | **2100 (±200)** | **240 (±40)** | **2,7 (±0,5)** |
| **- PVC ~ 20 ppm** | | | |
| **- H₂O ~ 10 ppm** | | | |
| **- PE ~ 10 ppm** | | | |

Dans le tableau ci-dessus, les abréviations suivantes sont utilisées :
ABS : Acrylonitrile butadiène styrène ; PC : Polycarbonate ; PA66 : Polyamide 6-6 ; PMMA : Poly(méthacrylate de méthyle) ; PVC : Polychlorure de vinyle ; PE : Polyéthylène ; H₂O : eau. MPa signifie Méga Pascal et KJ.m⁻² signifie kilo Joule par mètre carré. Le signe « Ø » signifie « diamètre ».

Les éprouvettes selon l'invention - soit précisément celles présentées dans les deux dernières lignes du tableau ci-dessus - sont notées en caractère gras dans le tableau ci-dessus. Comme on peut le constater, les éprouvettes selon l'invention présentent des résultats de propriétés mécaniques ainsi que de processabilité en extrusion meilleurs, voire bien meilleurs, que pour les éprouvettes selon l'état de la technique ou comparative. Ces propriétés mécaniques sont celles recherchées pour un objet décoratif, son usage classique dans des conditions d'environnement parfois rigoureuses : température (très) inférieure au 0°C, environnement très humide ou très ensoleillé, solidité tout en montrant une très bonne résistance au choc et à l'élongation à la rupture.

D'autres caractéristiques et propriétés sont prises en considération pour son utilité en tant qu'objet décoratif, notamment sa capacité à être peint ou revêtu d'une couche adhésive et la stabilité de ses propriétés mécaniques lorsque les variations de température et d'hydrométrie sont importantes.

Par ailleurs, des tests et essais complémentaires ont montré de meilleurs résultats lorsque les quantités résiduelles, dans la composition à base de polyéthylène téréphtalate, présentent en outre au plus 5 ppm de métaux et/ou au plus 10 ppm de polyacrylonitrile.

Outre ces caractéristiques propres à la composition polymère selon l'invention, cette dernière pourra comprendre un certain(s) nombre(s) d'additif(s) ou de composant(s) destiné(s) à conférer des propriétés particulières additionnelles et/ou à améliorer les propriétés intrinsèques de la composition.

Ainsi, préalablement à l'étape d'extrusion des cordons, on peut mélanger la composition à base de polymère selon l'invention avec au moins un additif de manière à former un mélange final, présentant des propriété(s) et/ou fonction(s) additionnelle(s).

Bien entendu, cet additif n'est qu'optionnellement présent compte tenu des excellentes propriétés intrinsèques de la composition à base de polymère selon l'invention. On peut noter toutefois que la composition à base polymère selon l'invention présente d'excellentes propriétés mécaniques, aussi il peut être souhaité, voire nécessaire, d'améliorer en particulier ses propriétés ignifuges ou en encore de résistante au vieillissement du au rayons solaires.

Des plastifiants pourront être ajoutés à la composition afin de faciliter la mise en oeuvre et améliorer la productivité de la composition à base de polymère selon l'invention. On peut citer comme exemples les huiles minérales paraffiniques aromatiques ou naphtaléniques qui permettent également d'améliorer le pouvoir d'adhérence de la composition selon l'invention. On peut également citer comme plastifiant les phtalates, azelates, adipates, le phosphate de ticrésyle.

Des promoteurs d'adhésion, bien que non nécessaires, peuvent être avantageusement ajoutés afin d'améliorer le pouvoir d'adhérence de la composition selon l'invention lorsque celui-ci doit être particulièrement élevé. L'objet décoratif selon l'invention est destiné à être utilisé en tant que tel, sans être associé à une structure telle qu'un cadre aluminium ou en une autre matière polymère. Néanmoins, dans ce dernier cas en particulier, l'utilisation de promoteurs d'adhésion est utile, voire nécessaire, afin d'assurer une parfaite cohésion, collage ou association de l'objet décoratif selon l'invention et d'un support ou autre élément à base de polymère, créé indépendamment dudit objet décoratif. Le promoteur d'adhésion est un ingrédient non polymérique ; il peut être organique, cristallin, minéral et plus préférentiellement semi-minéral semi-organique. Parmi ceux-ci, on peut citer les titanates ou les silanes organiques, comme par exemple les monoalkyl titanates, les trichlorosilanes et les trialkoxysilanes, les trialcooxysilane. Avantageusement, on utilisera les trialcooxysilanes contenant un groupement époxy, vinyle et amine.

Lorsque l'objet décoratif est destiné à rester en extérieur pendant une longue période dans des régions ensoleillées du globe, le rayonnement UV (Ultra-Violet) est susceptible d'entraîner un léger jaunissement de la composition à base de polymère utilisée de sorte que des stabilisants UV et des absorbeurs UV tels que le benzotriazole, le benzophénone et les autres amines encombrés, peuvent avantageusement être ajoutés afin d'assurer la transparence ou une coloration invariante de l'objet décoratif durant toute sa durée de vie. Ces composés peuvent être par exemple à base de benzophénone ou de benzotriazole. On peut les ajouter dans des quantités inférieures à 10% en masse de la masse totale de la composition et préférentiellement de 0,1 à 5%.

On pourra également ajouter des antioxydants pour limiter le jaunissement lors de la fabrication et de l'utilisation de l'objet décoratif tels que les composés phosphorés (phosphonites et/ou phosphites) et les phénoliques encombrés. On peut ajouter ces antioxydants dans des quantités inférieures à 10% en masse de la masse totale de la composition et préférentiellement de 0,1 à 5%.

Des agents retardateurs de flamme peuvent également être ajoutés. Ces agents peuvent être halogénés ou non-halogénés, l'utilisation de ces derniers étant conseillés voire obligatoires en fonction des pays. Parmi les agents halogénés, on peut citer les produits bromés tels que des diphényles polybromés ou des phosphobromés. On peut également utiliser comme agent non-halogéné les additifs à base de phosphore tels que les phosphates, les phosphonates et les polyphosphonates, des organophosphorés azotés, les phosphines et oxyde de phosphine, de l'oxyde d'antimoine, de polyphosphate, de phosphinate ou de pyrophosphate, le cyanurate de mélamine, le pentaérythritol, les zéolithes, le phosphore rouge ainsi que les mélanges de ces agents. Parmi les phosphine et oxyde de phosphine, on peut citer l'oxyde de triphénylphosphine, le triphénylphosphine avec de la mélamine phosphate ou le 1,4 diisobutyl-2,3,4,5,6-tetrahydroxy-1,4-diphosphacyclohexane 1,4-dioxyde. Parmi les phosphonates et polyphosphonates, on peut citer le phosphonate cyclique, le polysulfonyldiphenylène phénylbosphonate, le polysulfonyldiphenylène thophenylphosphonate, le sirophosphonate ou le polyphosphonate avec ponts biphényle. Parmi les organophosphorés azotés, on peut citer la mélamine phosphate ou pyrophosphate, la mélamine polyphosphate, le triphenylphosphine sulfide, l'acide diphosphonique. Parmi les phosphates, on peut citer le bisphénol A et ses dérivés, le tribisphénylphosphate ou le résorcinol bis(diphénylphosphate). La composition à base de polymère selon l'invention peut comprendre ces agents dans des proportions allant de 0,5% à 25% par rapport à la masse totale du mélange composition à base de polymère selon l'invention - additif(s), en l'espèce d'agents retardateurs de flamme.

On peut également ajouter des pigments comme par exemple le dioxyde de titane, des composés colorants ou azurants dans des proportions allant jusqu'à un maximum de 10% par rapport à la masse totale du mélange « composition à base de polymère selon l'invention - additif(s) », en l'espèce de pigments / colorants / azurants.

Des charges, en particulier de type minérale, peuvent également être ajoutées pour améliorer la tenue thermomécanique de la composition. De façon non limitative, on peut donner comme exemples la silice, l'alumine ou les carbonates de calcium ou les nanotubes de carbone ou encore les fibres de verre. On peut utiliser des argiles modifiées ou non modifiées qui sont mélangées à l'ordre nanométrique ; ceci permet d'obtenir une composition plus transparente.

Par souci de clarté, les tests réalisés par la demanderesse sur la composition à base de polyéthylène téréphtalate selon l'invention incluant un ou plusieurs des additifs susvisés ne sont pas présentés ici mais il a été apprécié par la demanderesse que de tels additifs améliorent les propriétés mécaniques des compositions selon l'invention et/ou leur confèrent des fonctions nouvelles, telles que des propriétés ignifuges, d'adhésion à une autre couche polymère ou encore de stabilité vis-à-vis des rayons UV.

Selon une possibilité avantageuse offerte par l'invention, lorsque l'on fabrique le cordon extrudé à base polymère en PET, le support de réception de ce cordon extrudé présente avantageusement une température égale à la température ambiante ou une température inférieure à la température ambiante. Des résultats de test sont présentés dans le Tableau 2 ci-dessous.

| Tableau 2 | | | | |
|---|---|---|---|---|
| support de réception (plaque) | T° de refroidissement | Retrait (%) | Module d'Young (MPa) | Elongation à la rupture (%) |
| Acier inoxydable | 100° (chauffage) | > 2 | 2900 | 12 |
| | **20°C (ambiant)** | 2 < | 1920 | 100 |
| | **0°C** | 2 < | 2300 | 190 |
| | -20°C | 2 < | 1720 | 50 |
| Laiton | 100° (chauffage) | > 2 | 2850 | 16 |
| | **20°C (ambiant)** | 2 < | 2100 | 115 |
| | **0°C** | 2 < | 2450 | 190 |
| | -20°C | 2 < | 1870 | 85 |
| Cupronickel | 100° (chauffage) | > 2 | 2850 | 18 |
| | **20°C (ambiant)** | 2 < | 2200 | 120 |
| | **0°C** | 2 < | 1980 | 180 |
| | -20°C | 2 < | 1750 | 75 |
| **Aluminium ou alliage d'aluminium** | 100° (chauffage) | > 2 | 2200 | 10 |
| | **20°C (ambiant)** | 2 < | 1750 | 150 |
| | **0°C** | 2 < | 2100 | 240 |
| | -20°C | 2 < | 1850 | 80 |
| **Cuivre ou alliage de cuivre** | 100° (chauffage) | > 2 | 2100 | 20 |
| | **20°C (ambiant)** | 2 < | 1800 | 140 |
| | **0°C** | 2 < | 2050 | 230 |
| | -20°C | 2 < | 1900 | 90 |

Toujours lorsque l'on fabrique le cordon extrudé à base polymère en PET, Il est avantageux de souffler un gaz sur le cordon extrudé de manière à forcer le refroidissement dudit cordon par convection, ledit gaz étant soufflé à une température inférieure ou égale à la température du milieu ambiant.

Toujours lorsque la composition à base polymère est un PET (polyéthylène téréphtalate), Il est avantageux de souffler un gaz sur le cordon extrudé de manière à forcer le refroidissement dudit cordon par convection, ledit gaz étant soufflé à une température inférieure ou égale à la température du milieu ambiant.

Le choix de la température de refroidissement (c'est-à-dire la température du gaz soufflé), a été déterminé après de multiples essais et tests comparatifs. Certains des résultats de ces essais et tests sont présentés dans le tableau ci-dessous. Des résultats pour un chauffage (100°C) du cordon sont également présentés dans ce tableau. Des éprouvettes identiques, obtenues après extrusion d'une composition constituée de PET à 99% pur (+ 20 ppm de PVC, 10 ppm d'eau, et 10 ppm de PE) ont été constituées pour pouvoir réaliser les tests normés ci-dessous, soit selon la norme ISO 527-1 pour la détermination du Module d'Young et l'élongation à la rupture. Le critère de retrait est considéré, éventuellement avec un léger aménagement structurel, selon la norme ISO 294.

Le critère préférentiellement recherché dans le cadre de la présente invention est le critère d'élongation à la rupture qui doit être suffisamment élevé pour éviter que l'objet soit cassant. Un autre critère est le critère de retrait qui doit avantageusement être au plus égal à 2%. Des résultats de tests sont présentés dans le tableau 3 ci-dessous.

| Tableau 3 | | | |
|---|---|---|---|
| T° de refroidissement | Retrait (%) | Module d'Young (MPa) | Elongation à la rupture (%) |
| 100° (chauffage) | > 2 | 2200 | 10 |
| **20°C (ambiant)** | 2 < | 1750 | 150 |
| **0°C** | 2 < | 2100 | 240 |
| -20°C | 2 < | 1850 | 80 |

Bien que l'invention ait été décrite en liaison avec plusieurs modes de composition particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Objet décoratif formé d'au moins une couche de cordon extrudé, présentant une épaisseur comprise entre un et quinze millimètres, d'une composition à base de polymère, avantageusement comportant au moins un additif,
**caractérisé en ce que** la composition à base de polymère consiste en du polyéthylène téréphtalate recyclé, ou un mélange de polyéthylène téréphtalate recyclé et de polyéthylène téréphtalate non recyclé, présentant au moins 99% en masse de polyéthylène téréphtalate et les quantités résiduelles suivantes :
- au plus 50 ppm de Polychlorure de vinyle,
- au plus 100 ppm d'eau, et
- au plus 30 ppm de Polyéthylène,
ces quantités résiduelles étant mesurées selon les méthodes indiquées dans la description.

2. Objet décoratif selon la revendication 1, dans lequel les quantités résiduelles présentent en outre au plus cinq ppm de métaux.

3. Objet décoratif selon la revendication 1 ou 2, dans lequel les quantités résiduelles présentent en outre au plus dix ppm de polyacrylonitrile.

4. Objet décoratif selon l'une quelconque des revendications précédentes, dans lequel les quantités résiduelles sont :
- d'au plus 20 ppm de Polychlorure de vinyle,
- d'au plus 50 ppm d'eau, préférentiellement d'au plus 20 ppm d'eau.

5. Objet décoratif selon l'une des revendications précédentes, dans lequel la susdite composition à base de polymère est mélangée avec au moins un additif pour former les cordons extrudés, ledit additif étant présent dans le mélange « composition à base polymère - additif » à hauteur d'au plus 40% en poids dudit mélange.

6. Objet décoratif selon la revendication 5, dans lequel l'additif est présent dans le mélange « composition à base polymère - additif » à hauteur d'au plus 10% en poids dudit mélange, de préférence d'au plus 5% en poids dudit mélange.

7. Objet décoratifs selon la revendication 5 ou 6, dans lequel l'additif consiste en des plastifiants, des promoteurs d'adhésion, des stabilisant/absorbeurs d'UV, des antioxydants, des retardateurs de flamme, de pigments/colorants/azurants et/ou de charges.

8. Objet décoratif selon l'une des revendications précédentes, dans lequel l'objet décoratif présente une pluralité de couches de cordons extrudés superposées ou ajoutées les unes sur les autres.

9. Objet décoratif selon l'une des revendications précédentes, dans lequel l'épaisseur du ou des cordon(s) est comprise entre deux et huit millimètres, de préférence entre trois et cinq millimètres.

10. Utilisation d'une composition à base de polymère, avantageusement comportant au moins un additif, la composition à base de polymère consistant en du polyéthylène téréphtalate recyclé présentant au moins 99% en masse de polyéthylène téréphtalate et les quantités résiduelles suivantes :
- au plus 50 ppm de Polychlorure de vinyle, avantageusement au plus 10 ppm de Polychlorure de vinyle.
- au plus 100 ppm d'eau, avantageusement d'au plus 10 ppm d'eau, et
- au plus 30 ppm de Polyéthylène,
ces quantités résiduelles étant mesurées selon les méthodes indiquées dans la description, pour la fabrication d'un objet décoratif formé à partir d'au moins une couche de cordon extrudé, avantageusement une pluralité de couches de cordons, présentant une épaisseur comprise entre un et quinze millimètres.

## Patentansprüche

1. Dekorationsobjekt, das aus mindestens einer Schicht eines extrudierten Strangs gebildet ist, der eine Dicke aufweist, die zwischen einem und fünfzehn Millimetern liegt, aus einer Zusammensetzung auf Basis eines Polymers, das vorteilhafterweise mindestens einen Zusatzstoff beinhaltet, **dadurch gekennzeichnet, dass** die Zusammensetzung auf Basis eines Polymers aus recyceltem Polyethylnterephtalat, oder einem Gemisch aus recyceltem Polyethylnterephtalatet und nicht recyceltem Polyethylnterephtalat besteht, das mindestens 99 Ma.-% an Polyethylnterephtalat und die folgenden Restmengen aufweist:
- höchstens 50 ppm an Polyvinylchlorid
- höchstens 100 ppm Wasser, und
- öchstens 30 ppm Polyethylen,
wobei diese Restmengen entsprechend den Verfahren gemessen werden, die in der Beschreibung angeführt sind.

2. Dekorationsobjekt nach Anspruch 1, wobei die Restmengen weiter höchstens fünf ppm an Metallen aufweisen.

3. Dekorationsobjekt nach Anspruch 1 oder 2, wobei die Restmengen weiter höchstens zehn ppm an Polyacrylnitril aufweisen.

4. Dekorationsobjekt nach einem der vorstehenden Ansprüche, wobei die Restmengen sind :
- höchstens 20 ppm an Polyvinylchlorid,
- höchstens 50 ppm an Wasser, vorzugsweise höchstens 20 ppm an Wasser.

5. Dekorationsobjekt nach einem der vorstehenden Ansprüche, wobei die zuvor genannte Zusammensetzung auf Basis eines Polymers mit mindestens einem Zusatzstoff gemischt wird, um die xtrudierten Schnüre zu bilden, wobei der Zusatzstoff in dem Gemisch "Zusammensetzung auf Basis eines Polymers - Zusatzstoff" in Höhe von höchstens 40 Gew.-% des Gemischs vorhanden ist.

6. Dekorationsobjekt nach Anspruch 5, wobei der Zusatzstoff in dem Gemisch "Zusammensetzung auf Basis eines Polymers - Zusatzstoff" in Höhe von höchstens 10 Gew.-% des Gemisches, vorzugsweise höchstens 5 Gew.-% des Gemisches vorhanden ist.

7. Dekorationsobjekt nach Anspruch 5 oder 6, wobei der Zusatzstoff aus Weichmachern, Haftvermittlern, Stabilisatoren/UV-Absorbern, Antioxidantien, Flammhemmern, Pigmenten/Farbstoffen/Aufhellern und/oder Füllstoffen besteht.

8. Dekorationsobjekt nach einem der vorstehenden Ansprüche, wobei das Dekorationsobjekt eine Vielzahl von übereinander überlagerten oder hinzugefügten Schichten aus extrudierten Schnüren aufweist.

9. Dekorationsobjekt nach einem der vorstehenden Ansprüche, wobei die Dicke des Strangs oder der Stränge zwischen zwei und acht Millimetern, vorzugsweise zwischen drei und fünf Millimetern liegt.

10. Verwendung einer Zusammensetzung auf Basis eines Polymers, die vorteilhafterweise mindestens einen Zusatzstoff beinhaltet, wobei die Zusammensetzung auf Basis eines Polymers aus recyceltem Polyethylenterephtalat besteht, das mindestens 99 Ma.-% Polyethylenterephtalat und die folgenden Restmengen aufweist:
- höchstens 50 ppm an Polyvinylchlorid, vorteilhafterweise höchstens 10 ppm an Polyvinylchlorid.
- höchstens 100 ppm an Wasssr, vorteilhafterweise höchstens 10 ppm an Wasser, und
- höchstens 30 ppm an Polyethylen,
wobei diese Restmengen entsprechend den Verfahren gemessen werden, die in der Beschreibung angeführt sind,
zur Herstellung eines Dekorationsobjekts, das aus mindestens einer Schicht eines extrudierten Strangs, vorteilhafterweise einer Vielzahl von Schichten von Strängen gebildet ist, die eine Dicke aufweisen, die zwischen einem und fünfzehn Millimetern liegt.

## Claims

1. A decorative object formed of at least one layer of extruded strand, having a thickness comprised between one and fifteen millimetres, of a polymer-based composition, advantageously including at least one additive, **characterised in that** the polymer-based composition consists of recycled polyethylene terephthalate, or a mixture of recycled polyethylene terephthalate and of non-recycled polyethylene terephthalate, having at least 99% by weight polyethylene terephthalate and the following residual amounts:
- at most 50 ppm of Polyvinyl chloride,
- at most 100 ppm of water, and
- at most 30 ppm of Polyethylene,
these residual amounts being measured according to the methods indicated in the description.

2. The decorative object according to claim 1, wherein the residual amounts further have at most five ppm of metals.

3. The decorative object according to claim 1 or 2, wherein the residual amounts further have at most ten ppm of polyacrylonitrile.

4. The decorative object according to any one of the preceding claims, wherein the residual amounts are:
- at most 20 ppm of Polyvinyl chloride,
- at most 50 ppm of water, preferably at most 20 ppm of water.

5. The decorative object according to one of the preceding claims, wherein the aforesaid polymer-based composition is mixed with at least one additive to form the extruded strands, said additive being present in the "polymer-based composition - additive" mixture at a level of at most 40% by weight of said mixture.

6. The decorative object according to claim 5, wherein the additive is present in the "polymer-based composition - additive" mixture at a level of at most 10% by weight of said mixture, preferably of at most 5% by weight of said mixture.

7. The decorative object according to claim 5 or 6, wherein the additive consists of plasticisers, adhesion promoters, stabilisers/UV absorbers, antioxidants, flame retarders, pigments/dyes/whiteners and/or fillers.

8. The decorative object according to one of the preceding claims, wherein the decorative object has a plurality of layers of extruded strands superimposed or added one on top of one another.

9. The decorative object according to one of the preceding claims, wherein the thickness of the strand(s) is comprised between two and eight millimetres, preferably between three and five millimetres.

10. A use of a polymer-based composition, advantageously including at least one additive, the polymer-based composition consisting of recycled polyethylene terephthalate having at least 99% by weight polyethylene terephthalate and the following residual amounts:
- at most 50 ppm of Polyvinyl chloride, advantageously at most 10 ppm of Polyvinyl chloride.
- at most 100 ppm of water, advantageously at most 10 ppm of water, and
- at most 30 ppm of Polyethylene,
these residual amounts being measured according to the methods indicated in the description,
for the manufacture of a decorative object formed from at least one layer of extruded strand, advantageously a plurality of layers of strands, having a thickness comprised between one and fifteen millimetres.
